# EUROPÄISCHE PATENTSCHRIFT

(11) **EP 4 162 559 B1**
(45) Veröffentlichungstag und Bekanntmachung des Hinweises auf die Patenterteilung: **04.09.2024**
(21) Anmeldenummer: 21723234.7
(22) Anmeldetag: 03.05.2021
(51) Int. Cl.: H01M 10/613, H01M 10/625, H01M 10/643, H01M 10/6556, H01M 10/6568, H01M 10/6557, H01M 50/213, H01M 50/249, H01M 50/291

(54) **ENERGIESPEICHERMODUL, FAHRZEUG MIT EINEM SOLCHEN SOWIE VERFAHREN ZUM HERSTELLEN EINES ENERGIESPEICHERMODULS**
ENERGY STORAGE MODULE, MOTOR VEHICLE HAVING SAME, AND METHOD FOR PRODUCING AN ENERGY STORAGE MODULE
MODULE ACCUMULATEUR D'ÉNERGIE ET VÉHICULE À MOTEUR LE COMPRENANT, ET PROCÉDÉ DE PRODUCTION D'UN MODULE ACCUMULATEUR D'ÉNERGIE

(30) Priorität: 03.06.2020 DE 102020114729
(43) Veröffentlichungstag der Anmeldung: 12.04.2023
(73) Patentinhaber: Bayerische Motoren Werke Aktiengesellschaft, 80809 München (DE)
(72) Erfinder: WAGNER, Matthias, 80807 München (DE); KLAFFKI, Andreas, 85716 Unterschleißheim (DE); POETZINGER, Markus, 80636 München (DE)
(86) Internationale Anmeldenummer: PCT/EP2021/061545
(87) Internationale Veröffentlichungsnummer: WO 2021/244811

(56) Entgegenhaltungen:
- EP-A2- 2 284 928
- EP-B1- 2 284 928
- WO-A1-2011/149075
- WO-A1-2019/046871
- US-A1- 2020 112 008

## Beschreibung

Die Erfindung betrifft ein Energiespeichermodul mit elektrochemischen Rundzellen, die zwischen sich gegenüberliegenden Trägerwänden angeordnet sind, welche die beiden Längsenden der Rundzellen halten.

Es sind elektrifizierte Kraftfahrzeuge bekannt, die ihre elektrische Energie zum Antrieb aus Energiespeichern auf elektrochemischer Basis beziehen. Diese weisen üblicherweise mehrere Energiespeichermodule auf, die miteinander elektrisch seriell und/oder parallel verbunden sind. Dabei sind beispielsweise Energiespeichermodule bekannt, welche kleine, senkrecht verbaute Rundzellen aufweisen, die in ein Gehäuse eingelegt und anschließend vergossen werden. Das Dokument US 2020/112008 A1 offenbart beispielsweise ein Energiespeichermodul mit einer Vielzahl von nebeneinander in Lagen angeordneten elektrochemischen Rundzellen, die miteinander elektrisch verbunden sind.

Es ist eine Aufgabe der vorliegenden Erfindung ein Energiespeichermodul zu schaffen, welches gut serienfertigungstauglich ist. Diese Aufgabe wird durch ein Energiespeichermodul gemäß Anspruch 1, ein Kraftfahrzeug gemäß Anspruch 10 und ein Verfahren gemäß Anspruch 11 gelöst. Vorteilhafte Weiterbildungen der Erfindung sind Gegenstand der abhängigen Ansprüche.

Gemäß einem Ausführungsbeispiel der Erfindung wird ein Energiespeichermodul bereitgestellt, mit einer Vielzahl von elektrochemischen Rundzellen, d.h. zylinderförmigen Speicherzellen, die miteinander elektrisch seriell und/oder parallel verbunden sind, wobei die Rundzellen nebeneinander in Lagen angeordnet sind und zumindest zwei übereinander angeordnete Lagen vorgesehen sind, und zwei gegenüberliegende Trägerwände, welche die beiden Längsenden der Rundzellen halten, wobei die Trägerwände Vorsprünge aufweisen, auf denen die Längsenden der Rundzellen aufliegen, und wobei die Vorsprünge von Lage zu Lage (bzw. von Rundzellenlage zu Rundzellenlage) ihre Länge entlang einer Längsrichtung der Rundzellen verändern. Somit wird ein sehr gut serienfertigungstaugliches Energiespeichermodul bereitgestellt. Durch die Vorsprünge unterschiedlicher Länge wird ermöglicht, die Rundzellen lageweise einzulegen, so dass diese sicher und positionsgenau auf den Vorsprüngen aufliegen und bedarfsweise dort verklebt werden können. Durch das erfindungsgemäße Energiespeichermodul ist die Position jeder der Rundzellen an die Geometrie der Trägerwände angepasst. Im Vergleich zu einer Umsetzung, bei der eine Trägerwand auf einen bereits fertig gestapelten Rundzellenstapel aufgeschoben wird, kommt es bei dem erfindungsgemäßen Energiespeichermodul beim Aufschieben der Trägerwände somit zu geringeren bzw. keinen Verschiebungen mehr, was bei der Verwendung von Kleber ein Ablösen verhindert.

Gemäß einem weiteren Ausführungsbeispiel der Erfindung sind die Rundzellen einer Lage zu den Rundzellen einer benachbarten, darüber oder darunter befindlichen Lage, quer zur Längsrichtung der Rundzellen um einen halben Durchmesser versetzt angeordnet. Diese Anordnung ist bauraumsparend und führt durch den Eingriff einer Rundzellenlage in die benachbarte Rundzellenlage zu zusätzlicher Stabilität.

Gemäß einem weiteren Ausführungsbeispiel der Erfindung entspricht eine Einfügerichtung einer Richtung, in der die Rundzellen auf die Vorsprünge auflegbar sind, wobei entlang der Einfügerichtung die Vorsprünge von Lage zu Lage eine größere Länge entlang einer Längsrichtung der Rundzellen aufweisen.

Gemäß einem weiteren Ausführungsbeispiel der Erfindung ist zwischen benachbarten Lagen jeweils ein Kühler angeordnet. Damit ist der Kühler sicher, platzsparend und stabil in das Energiespeichermodul integriert.

Gemäß einem weiteren Ausführungsbeispiel der Erfindung weist der Kühler eine Wellenform auf. Dadurch ist der Kühler bei der Herstellung einfach auf den Rundzellen positionierbar und leicht aufklebbar.

Gemäß einem weiteren Ausführungsbeispiel der Erfindung weist der Kühler mehrere Kühlerstränge auf, die sich parallel zueinander erstrecken und an ihren Längsenden miteinander fluidisch verbunden sind. Dadurch kann eine gleichmäßige Kühlung über sämtliche Rundzellen einer Lage erreicht werden.

Gemäß einem weiteren Ausführungsbeispiel der Erfindung haben zumindest einige Vorsprünge eine Auflagefläche, die an eine Kontur der Rundzellen angepasst ist, so dass die Auflagefläche über zumindest 90° an eine Umfangsfläche der Rundzellen anliegt. Damit ist die Position der Rundzellen bei der Herstellung definiert und die Rundzellen werden nach dem Einlegen und beim Verschieben der Trägerwände sicher in ihren vorgegebenen Positionen gehalten.

Gemäß einem weiteren Ausführungsbeispiel der Erfindung sind die Vorsprünge, welche einer Lage zugeordnet sind, zusammenhängend ausgebildet. Dadurch stabilisieren sich die Vorsprünge gegenseitig, so dass die einzelnen Vorsprünge stabiler sind.

Gemäß einem weiteren Ausführungsbeispiel der Erfindung ist jeweils zwischen (innerhalb einer Lage) benachbarten Vorsprüngen eine Führungswand ausgebildet. Dadurch ist die Positionierung während der Herstellung, insbesondere während des Einlegens der Rundzellen, sowie während des Verschiebens der Trägerwände noch einfacherer und sicherer.

Darüber hinaus betrifft die Erfindung ein Kraftfahrzeug mit einem solchen Energiespeichermodul.

Darüber hinaus stellt die Erfindung ein Verfahren zum Herstellen eines Energiespeichermoduls bereit, mit den Schritten: Bereitstellen einer Vielzahl von elektrochemischen Rundzellen; Bereitstellen von zwei Trägerwänden, die Vorsprünge unterschiedlicher Länge aufweisen und Ausrichten dieser derart, dass die Vorsprünge zu der jeweils anderen Trägerwand gerichtet sind; Einfügen mehrerer Rundzellen in einer Einfügerichtung und Ablegen der Rundzellen auf Vorsprüngen mit der größten Länge, wodurch eine Lage an nebeneinander liegenden Rundzellen ausgebildet wird; Bewegen der Trägerwände aufeinander zu um ein vorbestimmtes Maß; Einfügen mehrerer, weiterer Rundzellen in der Einfügerichtung und Ablegen der Rundzellen auf Vorsprüngen mit einer Länge, die im Vergleich zum vorhergehenden Einfügeschritt kleiner ist, wodurch eine weitere Lage an nebeneinander liegender Rundzellen ausgebildet wird, die in Einfügerichtung benachbart (insbesondere darüber- oder darunterliegend) zur Lage der Rundzellen aus dem vorhergehenden Einfügeschritt angeordnet ist. Durch die Vorsprünge unterschiedlicher Länge wird ermöglicht, die Rundzellen lageweise einzulegen, so dass diese sicher und positionsgenau auf den Vorsprüngen auflegen und bedarfsweise dort verklebt werden können. Durch das erfindungsgemäße Verfahren ist die Position jeder der Rundzellen an die Geometrie der Trägerwände angepasst. Im Vergleich zu einer Umsetzung, bei der eine Trägerwand auf einen Rundzellenstapel aufgeschoben wird, kommt es bei dem erfindungsgemäßen Verfahren beim Aufschieben der Trägerwände somit zu geringeren bzw. keinen Verschiebungen mehr, was bei der Verwendung von Kleber ein Ablösen verhindert.

Gemäß einem weiteren Ausführungsbeispiel des Verfahrens wird vor dem Schritt des Einfügens mehrerer, weiterer Rundzellen ein Kühler auf die vorhergehend ausgebildete Lage gelegt.

Gemäß einem weiteren Ausführungsbeispiel des Verfahrens wird der Kühler vor dem Einlegen wellenförmig ausgebildet.

Gemäß einem weiteren Ausführungsbeispiel des Verfahrens ist der Kühler vor dem Einlegen im Wesentlichen eben und wird durch Einklemmen zwischen zwei Lagen an Rundzellen in eine Wellenform gebracht.

Gemäß einem weiteren Ausführungsbeispiel des Verfahrens wird der Kühler auf die Rundzellen geklebt.

Gemäß einem weiteren Ausführungsbeispiel des Verfahrens werden die Rundzellen auf die Vorsprünge geklebt.

Gemäß einem weiteren Ausführungsbeispiel des Verfahrens werden die Schritte des Bewegens der Trägerwände aufeinander zu und des Einfügen mehrerer, weiterer Rundzellen wiederholt, um weitere Lagen an Rundzellen auszubilden.

Nachfolgend wird ein bevorzugtes Ausführungsbeispiel der vorliegenden Erfindung unter Bezugnahme auf die beigefügten Zeichnungen beschrieben. In diesen Zeichnungen ist Folgendes dargestellt:
- Figur 1: zeigt ein Energiespeichermodul gemäß einem Ausführungsbeispiel der Erfindung;
- Figur 2a: zeigt eine dreidimensionale Ansicht eines Teils des Energiespeichermoduls aus Fig. 1 bei einem ersten Herstellungsschritt;
- Figur 2b: zeigt eine Draufsicht eines Teils des Energiespeichermoduls aus Fig. 1 bei einem ersten Herstellungsschritt;
- Figur 3: zeigt eine dreidimensionale Ansicht eines Teils des Energiespeichermoduls aus Fig. 1 bei einem zweiten Herstellungsschritt;
- Figur 4: zeigt eine dreidimensionale Ansicht eines Teils des Energiespeichermoduls aus Fig. 1 bei einem dritten Herstellungsschritt;
- Figur 5: zeigt eine dreidimensionale Ansicht eines Teils des Energiespeichermoduls aus Fig. 1 bei einem vierten Herstellungsschritt;
- Figur 6: zeigt eine dreidimensionale Ansicht eines Teils des Energiespeichermoduls aus Fig. 1 bei einem fünften Herstellungsschritt;
- Figur 7: zeigt eine dreidimensionale Ansicht eines Teils des Energiespeichermoduls aus Fig. 1 bei einem sechsten Herstellungsschritt;
- Figur 8: zeigt eine dreidimensionale Ansicht eines Teils des Energiespeichermoduls aus Fig. 1 bei einem siebten Herstellungsschritt;
- Figur 9: zeigt eine dreidimensionale Ansicht eines Teils des Energiespeichermoduls aus Fig. 1 bei einem achten Herstellungsschritt, und
- Figur 10: zeigt eine dreidimensionale Ansicht eines Teils einer Trägerwand gemäß einem weiteren Ausführungsbeispiel.

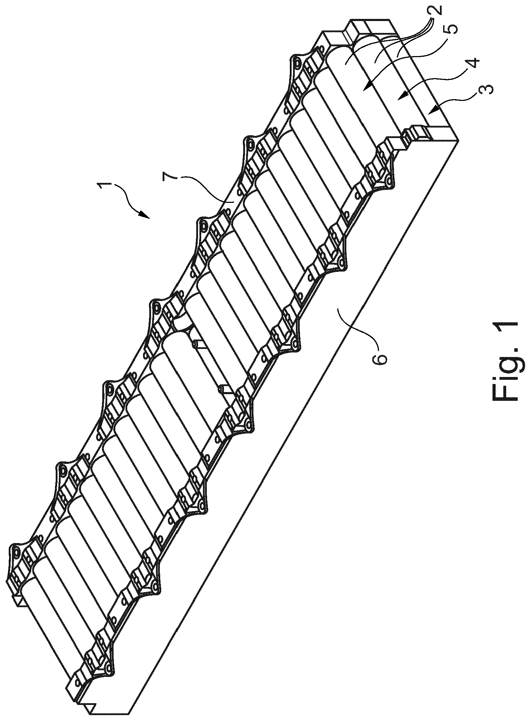

Figur 1 zeigt ein Energiespeichermodul 1 gemäß einem Ausführungsbeispiel der Erfindung. Das Energiespeichermodul 1 kann in einem (nicht dargestellten) Kraftfahrzeug eingebaut sein, insbesondere einem Personenkraftwagen. Bei dem Kraftfahrzeug handelt es sich um ein elektrifiziertes Kraftfahrzeug, wie beispielsweise einem batteriebetriebenen, rein elektrischen Fahrzeug oder einem Hybridfahrzeug.

Das Energiespeichermodul 1 hat eine Vielzahl von Rundzellen 2 (d.h. zylinderförmigen Speicherzellen), die auf elektrochemischer Basis elektrische Energie speichern und diversen Fahrzeugverbrauchern, zumindest einem Elektromotor zum Antrieb des Kraftfahrzeugs, zur Verfügung stellen. Der Übersichtlichkeit halber sind nur drei Rundzellen mit einem Bezugszeichen versehen. Die Rundzellen 2 sind wiederaufladbar. Insbesondere sind die Rundzellen 2 hinsichtlich ihrer Abmessungen gleich, insbesondere gleich lang. Darüber hinaus sind die Rundzellen des Energiespeichermoduls 1 elektrisch miteinander seriell und/oder parallel verbunden. Beispielsweise sind die Rundzellen innerhalb des Energiespeichermoduls 1 in Gruppen unterteilt, innerhalb derer die Rundzellen 2 miteinander elektrisch seriell verbunden sind, wobei die Gruppen wiederum elektrisch parallel verbunden sind. Eine Gesamtspannung aller verbundenen Rundzellen 2 ist über eine Anode und Kathode des Energiespeichermoduls 1 abgreifbar.

Das Kraftfahrzeug weist mehrere solcher Energiespeichermodule 1 auf, die miteinander elektrisch seriell und/oder parallel verbunden sind. Insbesondere sind die Energiespeichermodule 1 elektrisch parallel verbunden. Die Vielzahl der Rundzellen 2 des Energiespeichermoduls 1 ist baulich zu einer Einheit zusammengefasst, so dass jedes der Energiespeichermodule 1 im Wesentlichen quaderförmig. Vorzugsweise ist das Energiespeichermodul 1 so im Kraftfahrzeug eingebaut, dass Längsachsen der Rundzellen 2 im Wesentlichen parallel zur Fahrbahn sind. Es sind aber auch andere Einbaulagen möglich, beispielsweise könnte das Energiespeichermodul so in einem Kraftfahrzeug eingebaut werden, dass die Längsachsen der Rundzellen 2 parallel zu einer Hochachse des Kraftfahrzeugs ausgerichtet sind.

Die Rundzellen 2 sind in einer ersten Lage 3, einer zweiten Lage 4 und einer dritten Lage 5 angeordnet. Es können aber auch mehr oder weniger als drei Lagen sein, beispielsweise zwei, vier, fünf, usw. Innerhalb jeder Lage 3 - 5 sind die Rundzellen 2 nebeneinander angeordnet. Die einzelnen Lagen 3 - 5 an Rundzellen 2 sind übereinander angeordnet. Die Rundzellen 2 von benachbarten Lagen 3 - 5 sind gegenüber den Rundzellen aus der jeweils anderen Lage um den halben Durchmesser einer Rundzelle 2 versetzt angeordnet und zwar in einer Richtung quer zu den Längsachsen der Rundzellen 2, insbesondere in einer Richtung entlang einer Längsrichtung des Energiespeichermoduls 1.

Die Längsenden der einzelnen Rundzellen 2 werden alle von zwei sich gegenüberliegenden Trägerwänden 6 und 7 gehalten. Die Trägerwände 6 und 7 sind parallel zueinander angeordnet.

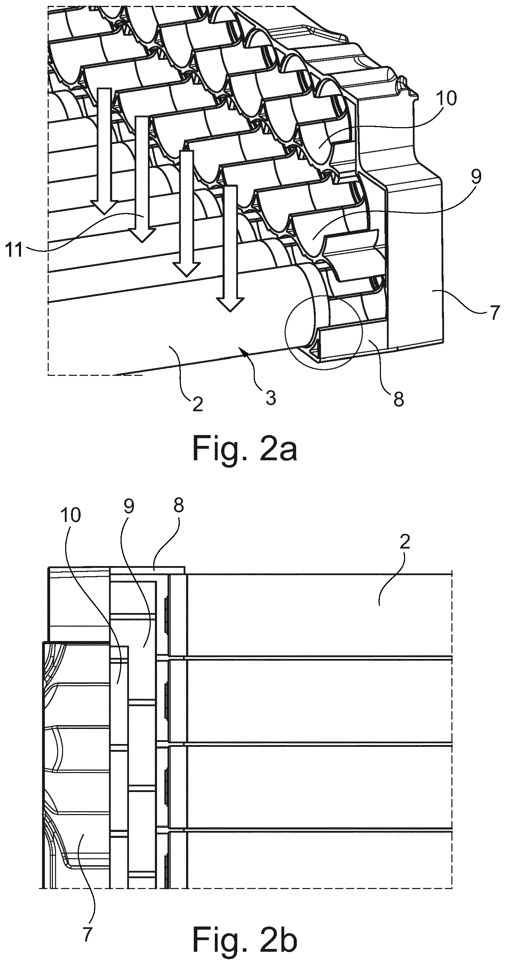

Figur 2a zeigt eine dreidimensionale Ansicht eines Teils des Energiespeichermoduls 1 aus Fig. 1 bei einem ersten Herstellungsschritt. Wie in Figur 2a zu erkennen ist, haben die Trägerwände 6 und 7 Vorsprünge 8, 9, 10, auf denen die Rundzellen 2 aufliegen. Die Vorsprünge 8 - 10 haben eine unterschiedliche Länge in einer Richtung entlang der Längsachsen der Rundzellen 2. Genauer haben die Vorsprünge 8, welche der ersten Lage 3 an Rundzellen 2 zugeordnet sind, die längste Länge. Die Vorsprünge 10, welche der dritten Lage 5 an Rundzellen 2 zugeordnet sind, die kürzeste Länge. Die Länge der Vorsprünge 9, die der zweiten Lage 4 zugeordnet sind, haben eine Länge dazwischen. Anders ausgedrückt nimmt die Länge der Vorsprünge 8 - 10 schrittweise von einer ersten Lage, welche bei der Herstellung zuerst eingebracht wird, hin zu einer letzten Lage ab.

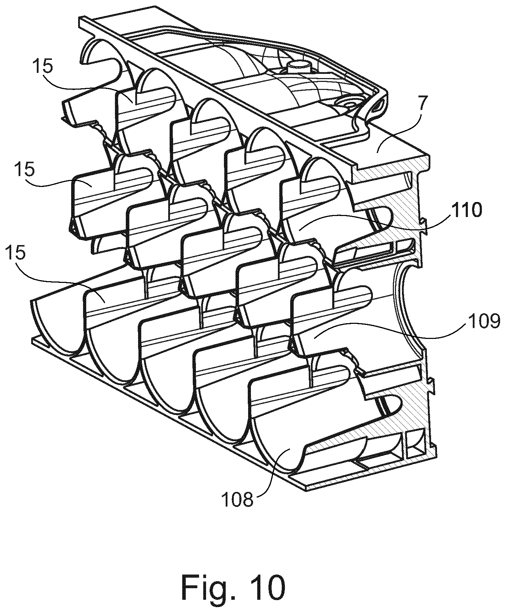

Die Vorsprünge 8 - 10 können im Wesentlichen halbschalenartig ausgebildet sein. Ihre Auflageflächen, die zum Auflegen der Endbereiche der Rundzellen 2 ausgebildet sind, sind so ausgebildet, dass die Form der Auflageflächen derart ausgestaltet ist, dass die Auflageflächen an einen Abschnitt der Umfangsflächen der Rundzellen 2 anliegen. Die Vorsprünge 8 - 10 können zusammenhängend ausgebildet sein, so dass sich pro Lage kontinuierlich ein Vorsprung an den benachbarten Vorsprung anschließt. Die Vorsprünge 8 - 10 können aber auch einzeln, wie in Fig. 10 dargestellt, ausgebildet sein.

Die nachfolgend beschriebenen Herstellungsschritte sind nicht als abschließend zu verstehen, sondern es können selbstverständlich im Folgenden nicht beschriebene vorhergehende Schritte, Zwischenschritte oder nachgelagerte Herstellungsschritte vorhanden sein.

In einem ersten Herstellungsschritt werden die zwei Trägerwände 6 und 7 parallel zueinander platziert. Wie in Fig. 1b dargestellt, werden die Rundzellen 2 der ersten Lage 3 werden in einer Einfügerichtung 11 auf die Vorsprünge 8 (mit der längsten Länge) aufgelegt. Dazu müssen die Trägerwände 6, 7 so zueinander beabstandet sein, dass jeweils beide Längsenden der Rundzellen 2 auf den Vorsprüngen 8 zum Liegen kommen und diese Rundzellen 2 an den übrigen, darüber liegenden Vorsprüngen 9, 10 vorbeigeführt werden können.

Wie in der Draufsicht der Figur 2b erkennbar, sind die Trägerwände 6, 7 bei diesem ersten Herstellungsschritt so voneinander beabstandet, dass im aufgelegten Zustand der Rundzellen 2 der ersten Lage 3, die Längsenden in der Draufsicht leicht von den darüber befindlichen Vorsprüngen 9, 10 beabstandet sind.

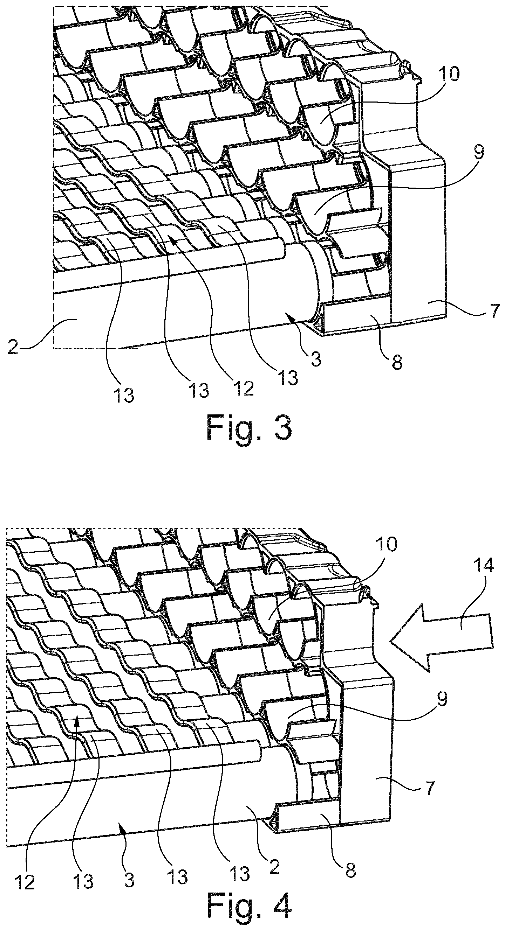

Figur 3 zeigt eine dreidimensionale Ansicht eines Teils des Energiespeichermoduls 1 aus Fig. 1 bei einem zweiten Herstellungsschritt. Zwischen, in Einfügerichtung, benachbarten Lagen an Rundzellen 2 ist jeweils ein Kühler 12 angeordnet. Dieser umfasst mehrere Kühlerstränge 13, beispielsweise in Form von flachen Streifen, die an ihren Längsenden miteinander verbunden sind und in ihrem Inneren von Kühl- oder Kältemittel durchströmbar sind. Die Kühlerstränge 13 sind dabei bereits in einer Wellenform vorgeformt oder im Wesentlichen geradlinig und werden erst durch Einklemmen zwischen zwei Lagen an Rundzellen 2 in diese Wellenform gebracht. Der Kühler 13 wird mit der darunter und/oder darüber befindlichen Lage an Rundzellen 2 mit einem thermisch leitfähigen Klebstoff, insbesondere einer Wärmeleitvergußmasse verklebt. Dieser Klebstoff wird beispielsweise auf die Rundzellen 2 aufgebracht, bevor der Kühler 13 auf diese aufgelegt wird.

Figur 4 zeigt eine dreidimensionale Ansicht eines Teils des Energiespeichermoduls 1 aus Fig. 1 bei einem dritten Herstellungsschritt. Nachdem alle Rundzellen 2 der ersten Lage 3 alle auf den entsprechenden Vorsprüngen 8 aufgelegt sind und der Kühler 13 angeklebt wurde, werden die Trägerwände 6, 7 aufeinander zu geschoben, wie durch den Pfeil 14 angedeutet. Dabei werden die Trägerwände 6, 7 um ein solches Maß aufeinander zu geschoben (beispielsweise 10mm), dass die Längsenden der Rundzellen 2 der zweiten Lage 4 beim nachfolgenden Auflegen auf die Vorsprünge 9 zur Auflage kommen, jedoch an den darüber liegenden Vorsprüngen 10 vorbei geführt werden können.

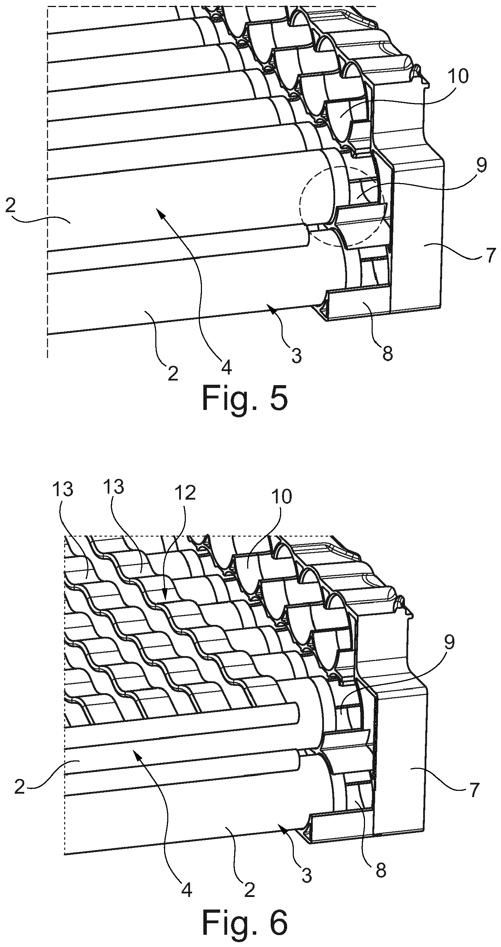

Figur 5 zeigt eine dreidimensionale Ansicht eines Teils des Energiespeichermoduls 1 aus Fig. 1 bei einem vierten Herstellungsschritt. Dabei werden die Rundzellen 2 der zweiten Lage 4 auf die Vorsprünge 9 mittlerer Länge entlang der Einfügerichtung 11 aufgelegt. Dies geschieht wie bereits im Zusammenhang mit den Rundzellen 2 der ersten Lage 3 beschrieben.

Figur 6 zeigt eine dreidimensionale Ansicht eines Teils des Energiespeichermoduls 1 aus Fig. 1 bei einem fünften Herstellungsschritt.

Bei diesem Herstellungsschritt wird ein Kühler 12 auf die zweite Lage 4 an Rundzellen 2 aufgebracht. Hier gilt entsprechend die Beschreibung zu Figur 3.

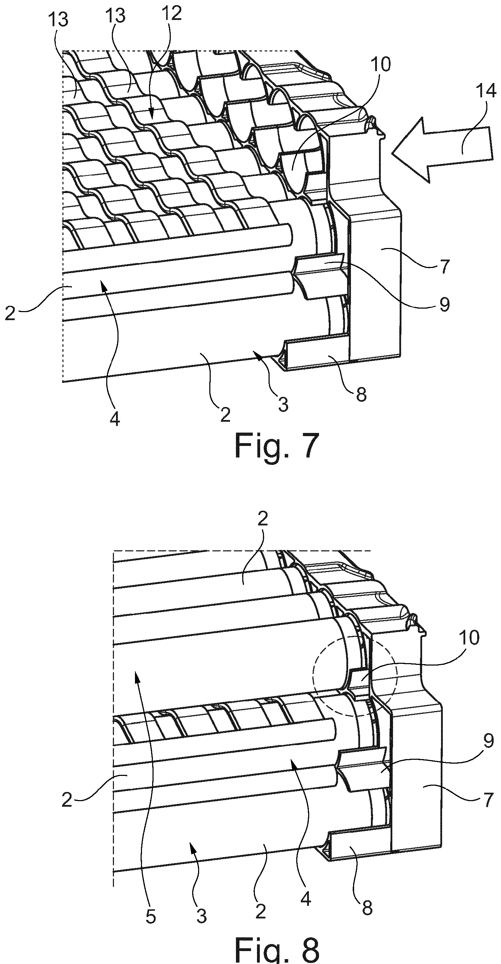

Figur 7 zeigt eine dreidimensionale Ansicht eines Teils des Energiespeichermoduls aus Fig. 1 bei einem sechsten Herstellungsschritt. Wie im Zusammenhang mit Fig. 4 erläutert, werden die Trägerwände 6, 7 aufeinander zu geschoben, wie durch den Pfeil 14 angedeutet. Dabei werden die Trägerwände 6, 7 um ein solches Maß aufeinander zu geschoben, dass die Längsenden der Rundzellen 2 der dritten Lage 5 beim nachfolgenden Auflegen auf die Vorsprünge 10 zur Auflage kommen und die Längsenden der Rundzellen 2 der dritten Lage 5 nur ein kleines Spiel zu den Innenseiten der Trägerwände 6, 7 haben.

Figur 8 zeigt eine dreidimensionale Ansicht eines Teils des Energiespeichermoduls 1 aus Fig. 1 bei einem siebten Herstellungsschritt. Hier werden die Rundzellen 2 der dritten Lage 5 auf die Vorsprünge 10 aufgelegt. Dabei können die Trägerwände 6, 7 so voneinander beabstandet sein, dass nur ein sehr kleiner Zwischenraum zwischen den jeweiligen Stirnseiten der Rundzellen 2 und den Innenseiten der Trägerwände 6, 7 existiert.

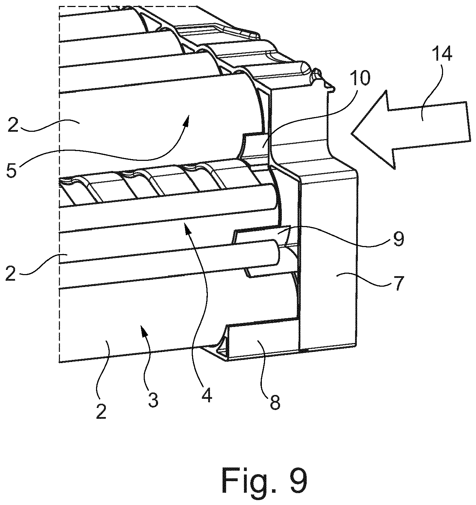

Figur 9 zeigt eine dreidimensionale Ansicht eines Teils des Energiespeichermoduls aus Fig. 1 bei einem achten Herstellungsschritt. Dabei werden die Trägerwände 6, 7 aufeinander zu bewegt bzw. aufeinander zu gedrückt, wie dies durch den Pfeil 14 angedeutet ist.

Zur Befestigung der Rundzellen 2 an den Trägerwände 6, 7 bzw. zum Ausbilden eines stabilen Gesamtpakets gibt es verschiedene Möglichkeiten. Beispielsweise können die Rundzellen 2 an die Vorsprünge 8 - 10 geklebt werden, indem vor dem Auflegen der einzelnen Rundzellen 2 auf die Vorsprünge 8 - 10 ein langsam aushärtender Klebstoff aufgebracht wird.

Dieser muss ein Verschieben der Trägerwände 6, 7 aufeinander zu, entsprechend des Pfeils 14, zulassen und darf erst nach dem achten Herstellungsschritt derart aushärten, dass kein Verschieben der Trägerwände 6, 7 mehr möglich ist. Eine andere Möglichkeit wäre, die Rundzellen 2 und optional die Trägerwände 6, 7 mit einer aushärtenden oder aushärtbaren Masse zu umgießen. Eine weitere Möglichkeit wäre, erst nach dem achten Herstellungsschritt mittels eines Klebstoffs die Rundzellen 2 an die Vorsprünge 8 - 10 oder die Innenseiten der Trägerwände 6, 7 zu kleben. Wieder eine andere Möglichkeit wäre, das Paket aus Trägerwänden 6, 7 und Rundzellen 2 mit einem Rahmen oder einem Gehäuse zu umgeben. Eine weitere Möglichkeit wäre, die Längsenden der Trägerwände 6, 7 mittels zweier Zuganker zu verbinden, so dass ein geschlossener Rahmen aus den beiden Trägerwänden 6, 7 und zwei Zugankern gebildet wird. Diese Zuganker könnten an die Längsenden der Trägerwände 6, 7 geklebt, geschraubt, geschweißt oder geklickt werden.

Figur 10 zeigt eine dreidimensionale Ansicht eines Teils einer Trägerwand 7 gemäß einem weiteren Ausführungsbeispiel. Im Unterschied zum vorhergehenden Ausführungsbeispiel sind Vorsprünge 108, 109 und 110 vorgesehen, die mit Führungswänden 15 versehen sind, die sich von den Vorsprüngen 108, 109 und 110 in einer entgegengesetzten Richtung zur Einfügerichtung 11 erstrecken. Die Führungswände 15 erstrecken sich bei aufgelegten Rundzellen 2 zwischen die Endbereiche von zwei nebeneinander angeordneten Rundzellen 2 der gleichen Lage. Die Führungswände 15 sind einerseits hilfreich bei der Positionierung während des Einlegens der Rundzellen 2 auf die Vorsprünge 108 - 110 und anderseits halten sie die Rundzellen 2 in ihren vorhergesehenen Positionen während die Trägerwände 6, 7 aufeinander zu geschoben werden.

Die Vorsprünge 108, welche den Rundzellen 2 der ersten Lage 3 zugeordnet sind, entsprechen abgesehen von den Führungswänden 15 im Wesentlichen den Vorsprüngen 8. Die Vorsprünge 109 sind den Rundzellen 2 der zweiten Lage 4 zugeordnet und im Unterschied zu den Vorsprüngen 9 nicht zusammenhängend. Die Vorsprünge 110 sind den Rundzellen 2 der dritten Lage 5 zugeordnet und im Unterschied zu den Vorsprüngen 10 nicht zusammenhängend. Hinsichtlich der Längenänderung von Lage zu Lage gilt das im Zusammenhang mit den Vorsprüngen 8 - 10 Beschriebene.

Während die Erfindung detailliert in den Zeichnungen und der vorangehenden Beschreibung veranschaulicht und beschrieben wurde, ist diese Veranschaulichung und Beschreibung als beispielhaft und nicht als beschränkend zu verstehen und es ist nicht beabsichtigt die Erfindung auf das offenbarte Ausführungsbeispiel zu beschränken. Die bloße Tatsache, dass bestimmte Merkmale in verschiedenen abhängigen Ansprüchen genannt sind, soll nicht andeuten, dass eine Kombination dieser Merkmale nicht auch vorteilhaft genutzt werden könnte.

## Patentansprüche

1. Energiespeichermodul (1) mit
einer Vielzahl von elektrochemischen Rundzellen (2), die miteinander elektrisch seriell und/oder parallel verbunden sind,
wobei die Rundzellen (2) nebeneinander in Lagen (3, 4, 5) angeordnet sind und zumindest zwei übereinander angeordnete Lagen (3, 4, 5) vorgesehen sind, und
zwei gegenüberliegende Trägerwände (6, 7), welche die beiden Längsenden der Rundzellen (2) halten,
wobei die Trägerwände (6, 7) Vorsprünge (8, 9, 10; 108, 109, 110) aufweisen, auf denen die Längsenden der Rundzellen (2) aufliegen, und
wobei die Vorsprünge (8, 9, 10; 108, 109, 110) von Lage zu Lage ihre Länge entlang einer Längsrichtung der Rundzellen (2) verändern.

2. Energiespeichermodul (1) gemäß Anspruch 1, wobei die Rundzellen (2) einer Lage (3, 4, 5) zu den Rundzellen (2) einer benachbarten, darüber oder darunter befindlichen Lage (3, 4, 5), quer zur Längsrichtung der Rundzellen um einen halben Durchmesser versetzt angeordnet sind.

3. Energiespeichermodul (1) gemäß einem der vorhergehenden Ansprüche, wobei eine Einfügerichtung (11) einer Richtung entspricht, in der die Rundzellen (2) auf die Vorsprünge (8, 9, 10; 108, 109, 110) auflegbar sind, wobei entlang der Einfügerichtung (11) die Vorsprünge (8, 9, 10; 108, 109, 110) von Lage zu Lage eine größere Länge entlang einer Längsrichtung der Rundzellen (2) aufweisen.

4. Energiespeichermodul (1) gemäß einem der vorhergehenden Ansprüche, wobei zwischen benachbarten Lagen (3, 4, 5) jeweils ein Kühler (12) angeordnet ist.

5. Energiespeichermodul (1) gemäß Anspruch 4, wobei der Kühler (12) eine Wellenform aufweist.

6. Energiespeichermodul (1) gemäß einem der Ansprüche 4 oder 5, wobei der Kühler (12) mehrere Kühlerstränge (13) aufweist, die sich parallel zueinander erstrecken und an ihren Längsenden miteinander fluidisch verbunden sind.

7. Energiespeichermodul (1) gemäß Anspruch 1, wobei zumindest einige Vorsprünge (8, 9, 10; 108, 109, 110) eine Auflagefläche haben, die an eine Kontur der Rundzellen (2) angepasst ist, so dass die Auflagefläche über zumindest 90° an eine Umfangsfläche der Rundzellen (2) anliegt.

8. Energiespeichermodul (1) gemäß einem der vorhergehenden Ansprüche, wobei die Vorsprünge (8, 9, 10; 108), welche einer Lage (3, 4, 5) zugeordnet sind, zusammenhängend ausgebildet sind.

9. Energiespeichermodul (1) gemäß einem der vorhergehenden Ansprüche, wobei jeweils zwischen benachbarten Vorsprüngen (108, 109, 110) eine Führungswand (15) ausgebildet ist.

10. Kraftfahrzeug mit einem Energiespeichermodul (1) gemäß einem der Ansprüche 1 bis 9.

11. Verfahren zum Herstellen eines Energiespeichermoduls (1), mit den Schritten:
Bereitstellen einer Vielzahl von elektrochemischen Rundzellen (2);
Bereitstellen von zwei Trägerwänden (6, 7), die Vorsprünge (8, 9, 10; 108, 109, 110) unterschiedlicher Länge aufweisen und Ausrichten dieser derart, dass die Vorsprünge (8, 9, 10; 108, 109, 110) zu der jeweils anderen Trägerwand (6, 7) gerichtet sind;
Einfügen mehrerer Rundzellen (2) in einer Einfügerichtung (11) und Ablegen der Rundzellen (2) auf Vorsprüngen (8, 9, 10; 108, 109, 110) mit der größten Länge, wodurch eine Lage (3, 4, 5) an nebeneinander liegenden Rundzellen (2) ausgebildet wird;
Bewegen der Trägerwände (6, 7) aufeinander zu um ein vorbestimmtes Maß;
Einfügen mehrerer, weiterer Rundzellen (2) in der Einfügerichtung (11) und Ablegen der Rundzellen (2) auf Vorsprüngen (8, 9, 10; 108, 109, 110) mit einer Länge, die im Vergleich zum vorhergehenden Einfügeschritt kleiner ist, wodurch eine weitere Lage (3, 4, 5) an nebeneinander liegender Rundzellen (2) ausgebildet wird, die in Einfügerichtung (11) benachbart zur Lage (3, 4, 5) der Rundzellen (2) aus dem vorhergehenden Einfügeschritt angeordnet ist.

12. Verfahren gemäß Anspruch 11, wobei vor dem Schritt des Einfügens mehrerer, weiterer Rundzellen (2) ein Kühler (12) auf die vorhergehend ausgebildete Lage (3, 4, 5) gelegt wird.

13. Verfahren gemäß Anspruch 12, wobei der Kühler (12) vor dem Einlegen wellenförmig ausgebildet wird.

14. Verfahren gemäß Anspruch 12, wobei der Kühler (12) vor dem Einlegen im Wesentlichen eben ist und durch Einklemmen zwischen zwei Lagen (3, 4, 5) an Rundzellen (2) in eine Wellenform gebracht wird.

15. Verfahren gemäß einem der Ansprüche 12 bis 14, wobei der Kühler (12) auf die Rundzellen (2) geklebt wird.

16. Verfahren gemäß einem der Ansprüche 11 bis 15, wobei die Rundzellen (2) auf die Vorsprünge (8, 9, 10; 108, 109, 110) geklebt werden.

17. Verfahren gemäß einem der Ansprüche 11 bis 16, wobei die Schritte des Bewegens der Trägerwände (6, 7) aufeinander zu und des Einfügen mehrerer, weiterer Rundzellen (2) wiederholt werden, um weitere Lagen (3, 4, 5) an Rundzellen (2) auszubilden.

## Claims

1. Energy storage module (1) having
a plurality of electrochemical round cells (2), which are electrically interconnected in series and/or in parallel, wherein the round cells (2) are arranged adjacent to one another in layers (3, 4, 5), and at least two layers (3, 4, 5) arranged on top of one another are provided, and
two opposite support walls (6, 7), which retain the two longitudinal ends of the round cells (2),
wherein the support walls (6, 7) have projections (8, 9, 10; 108, 109, 110), on which the longitudinal ends of the round cells (2) rest, and
wherein the projections (8, 9, 10; 108, 109, 110) vary in length in a longitudinal direction of the round cells (2) from layer to layer.

2. Energy storage module (1) according to Claim 1, wherein the round cells (2) of a layer (3, 4, 5) are arranged offset by half a diameter transversely to the longitudinal direction of the round cells relative to the round cells (2) of an adjacent layer (3, 4, 5) located above or below.

3. Energy storage module (1) according to any one of the preceding claims, wherein an insertion direction (11) corresponds to a direction in which the round cells (2) can be placed on the projections (8, 9, 10; 108, 109, 110), wherein in the insertion direction (11) the projections (8, 9, 10; 108, 109, 110) have a greater length in a longitudinal direction of the round cells (2) from layer to layer.

4. Energy storage module (1) according to any one of the preceding claims, wherein a cooler (12) is arranged between adjacent layers (3, 4, 5) in each case.

5. Energy storage module (1) according to Claim 4, wherein the cooler (12) has a corrugated shape.

6. Energy storage module (1) according to either of Claims 4 or 5, wherein the cooler (12) comprises a plurality of cooler strands (13) extending parallel to each other and fluidically connected to each other at their longitudinal ends.

7. Energy storage module (1) according to Claim 1, wherein at least some projections (8, 9, 10; 108, 109, 110) have a bearing surface adapted to a contour of the round cells (2) such that the bearing surface bears against a circumferential surface of the round cells (2) over at least 90°.

8. Energy storage module (1) according to any one of the preceding claims, wherein the projections (8, 9, 10; 108) associated with a layer (3, 4, 5) are formed contiguously.

9. Energy storage module (1) according to any one of the preceding claims, wherein a guide wall (15) is formed between adjacent projections (108, 109, 110) in each case.

10. Motor vehicle having an energy storage module (1) according to any one of Claims 1 to 9.

11. Method for producing an energy storage module (1), comprising the steps:
providing a plurality of electrochemical round cells (2);
providing two support walls (6, 7) having projections (8, 9, 10; 108, 109, 110) of different lengths and orienting the support walls such that the projections (8, 9, 10; 108, 109, 110) face the respective other support wall (6, 7) ;
inserting a plurality of round cells (2) in an insertion direction (11) and depositing the round cells (2) on projections (8, 9, 10; 108, 109, 110) having the greatest length, thereby forming a layer (3, 4, 5) of adjacent round cells (2);
moving the support walls (6, 7) towards each other by a predetermined amount;
inserting a plurality of further round cells (2) in the insertion direction (11) and depositing the round cells (2) on projections (8, 9, 10; 108, 109, 110) having a length which is smaller compared to the previous insertion step, thereby forming a further layer (3, 4, 5) of adjacent round cells (2) arranged in the insertion direction (11) adjacent to the layer (3, 4, 5) of round cells (2) from the previous insertion step.

12. Method according to Claim 11, wherein, prior to the step of inserting a plurality of further round cells (2), a cooler (12) is placed on the previously formed layer (3, 4, 5) .

13. Method according to Claim 12, wherein the cooler (12) is corrugated before insertion.

14. Method according to Claim 12, wherein the cooler (12) is substantially planar prior to insertion and is formed into a corrugated shape by clamping between two layers (3, 4, 5) of round cells (2).

15. Method according to any one of Claims 12 to 14, wherein the cooler (12) is bonded to the round cells (2).

16. Method according to any one of Claims 11 to 15, wherein the round cells (2) are bonded to the projections (8, 9, 10; 108, 109, 110).

17. Method according to any one of Claims 11 to 16, wherein the steps of moving the support walls (6, 7) towards each other and inserting a plurality of further round cells (2) are repeated in order to form further layers (3, 4, 5) of round cells (2).

## Revendications

1. Module de stockage d'énergie (1) comprenant
un grand nombre de cellules rondes électrochimiques (2) qui sont reliées électriquement les unes aux autres en série et/ou en parallèle,
les cellules rondes (2) étant disposées les unes à côté des autres suivant des couches (3, 4, 5) et au moins deux couches (3, 4, 5) étant prévues qui sont disposées l'une au-dessus de l'autre, et
deux parois de support opposées (6, 7), qui maintiennent les deux extrémités longitudinales des cellules rondes (2),
les parois de support (6, 7) comportant des saillies (8, 9, 10 ; 108, 109, 110) sur lesquelles les extrémités longitudinales des cellules rondes (2) viennent en appui, et
les saillies (8, 9, 10 ; 108, 109, 110) changeant de longueur d'une couche à l'autre le long d'une direction longitudinale des cellules rondes (2).

2. Module de stockage d'énergie (1) selon la revendication 1, les cellules rondes (2) d'une couche (3, 4, 5) étant disposées de manière décalée d'un demi-diamètre par rapport aux cellules rondes (2) d'une couche adjacente (3, 4, 5) située au-dessus ou au-dessous, transversalement à la direction longitudinale des cellules rondes.

3. Module de stockage d'énergie (1) selon l'une des revendications précédentes, une direction d'insertion (11) correspondant à une direction dans laquelle les cellules rondes (2) peuvent être placées sur les saillies (8, 9, 10 ; 108, 109, 110), les saillies (8, 9, 10 ; 108, 109, 110) ayant, le long de la direction d'insertion (11), une plus grande longueur d'une couche à l'autre le long d'une direction longitudinale des cellules rondes (2).

4. Module de stockage d'énergie (1) selon l'une des revendications précédentes, un refroidisseur (12) étant disposé entre des couches adjacentes (3, 4, 5).

5. Module de stockage d'énergie (1) selon la revendication 4, le refroidisseur (12) ayant une forme ondulée.

6. Module de stockage d'énergie (1) selon l'une des revendications 4 ou 5, le refroidisseur (12) comportant une pluralité de branches de refroidisseur (13) qui s'étendent parallèlement les unes aux autres et qui sont reliées fluidiquement les unes avec les autres au niveau de leurs extrémités longitudinales.

7. Module de stockage d'énergie (1) selon la revendication 1, au moins certaines saillies (8, 9, 10 ; 108, 109, 110) comportant une surface d'appui qui est adaptée à un contour des cellules rondes (2) de sorte que la surface d'appui vienne en appui sur une surface périphérique des cellules rondes (2) sur au moins 90°.

8. Module de stockage d'énergie (1) selon l'une des revendications précédentes, les saillies (8, 9, 10 ; 108), qui sont associées à une couche (3, 4, 5), étant conçues de manière contigüe.

9. Module de stockage d'énergie (1) selon l'une des revendications précédentes, une paroi de guidage (15) étant formée entre des saillies adjacentes (108, 109, 110) .

10. Véhicule automobile comprenant un module de stockage d'énergie (1) selon l'une des revendications 1 à 9.

11. Procédé de réalisation d'un module de stockage d'énergie (1), ledit procédé comprenant les étapes suivantes :
fournir un grand nombre de cellules rondes électrochimiques (2) ;
fournir deux parois de support (6, 7) qui comportent des saillies (8, 9, 10 ; 108, 109, 110) de longueurs différentes et les orienter de manière à ce que les saillies (8, 9, 10 ; 108, 109, 110) soient dirigées vers l'autre paroi de support (6, 7) ;
insérer plusieurs cellules rondes (2) dans une direction d'insertion (11) et placer les cellules rondes (2) sur les saillies (8, 9, 10 ; 108, 109, 110) ayant la plus grande longueur, ce qui forme une couche (3, 4, 5) de cellules rondes adjacentes (2) ;
déplacer les parois de support (6, 7) l'une vers l'autre d'une valeur prédéterminée ;
insérer plusieurs autres cellules rondes (2) dans la direction d'insertion (11) et placer les cellules rondes (2) sur des saillies (8, 9, 10 ; 108, 109, 110) d'une longueur qui est inférieure à celle de l'étape d'insertion précédente, ce qui forme sur les cellules rondes adjacentes (2) une autre couche (3, 4, 5) qui est disposée dans la direction d'insertion (11) de manière adjacente à la couche (3, 4, 5) de cellules rondes (2) de l'étape d'insertion précédente.

12. Procédé selon la revendication 11, avant l'étape d'insertion de plusieurs autres cellules rondes (2), un refroidisseur (12) étant placé sur la couche (3, 4, 5) formée précédemment.

13. Procédé selon la revendication 12, le refroidisseur (12) étant conçu sous forme ondulée avant l'insertion.

14. Procédé selon la revendication 12, le refroidisseur (12) étant sensiblement plan avant l'insertion et le serrage entre deux couches (3, 4, 5) de cellules rondes (2) lui conférant une forme ondulée.

15. Procédé selon l'une des revendications 12 à 14, le refroidisseur (12) étant collé aux cellules rondes (2).

16. Procédé selon l'une des revendications 11 à 15, les cellules rondes (2) étant collées aux saillies (8, 9, 10 ; 108, 109, 110).

17. Procédé selon l'une des revendications 11 à 16, les étapes de déplacement des parois de support (6, 7) l'une vers l'autre et d'insertion de plusieurs autres cellules rondes (2) étant répétées afin de former d'autres couches (3, 4, 5) de cellules rondes (2).
